# EUROPEAN PATENT SPECIFICATION

(11) **EP 4 285 012 B1**
(45) Date of publication and mention of the grant of the patent: **11.03.2026**
(21) Application number: 21702421.5
(22) Date of filing: 26.01.2021
(51) Int. Cl.: F02D 19/02, F02D 19/06, F02M 21/02, F02B 25/04

(54) **METHOD OF OPERATING A TWO-STROKE PISTON ENGINE, FUEL INJECTION SYSTEM, PISTON ENGINE AND METHOD OF RETROFITTING A TWO-STROKE PISTON ENGINE**
VERFAHREN ZUM BETREIBEN EINER ZWEITAKT-KOLBENMASCHINE, KRAFTSTOFFEINSPRITZSYSTEM, KOLBENMASCHINE UND VERFAHREN ZUM NACHRÜSTEN EINER ZWEITAKT-KOLBENMASCHINE
PROCÉDÉ POUR FAIRE FONCTIONNER UN MOTEUR À PISTON À DEUX TEMPS, SYSTÈME D'INJECTION DE CARBURANT, MOTEUR À PISTON ET PROCÉDÉ DE MODIFICATION D'UN MOTEUR À PISTON À DEUX TEMPS

(43) Date of publication of application: 06.12.2023
(73) Proprietor: WÄRTSILÄ SERVICES SWITZERLAND LTD, 8500 Frauenfeld (CH)
(72) Inventor: SCROCCO, Pietro, 8500 FRAUENFELD (CH); NANDA, Sangram Kishore, 8500 FRAUENFELD (CH)
(74) Representative: Berggren Oy
(86) International application number: PCT/EP2021/051700
(87) International publication number: WO 2022/161594

(56) References cited:
- EP-A1- 2 650 521
- WO-A1-2020/252518
- JP-A- 2012 036 780
- KR-A- 20210 005 520
- US-A- 2 767 691
- US-A1- 2015 330 289

## Description

### Technical field of the invention

The present invention relates to a method of retrofitting a large two-stroke piston engine as defined in claim 1.

### Background of the invention

Many large two-stroke engines, such as marine engines, can be operated using gaseous fuel, typically natural gas. Often the engines that are operable on gaseous fuel are so called dual-fuel engines, which can be operated using either gaseous fuel or liquid fuel. Natural gas can be stored either as compressed gas (CNG) or liquefied gas (LNG). Compressed natural gas is in gas phase during storage, supply to gas injectors and fuel injection. Liquefied natural gas is stored in liquid phase at a temperature of approximately -162 °C but injected into the cylinders in gas phase. The gaseous fuel can be introduced into an intake duct of an engine or injected directly into the cylinders of the engine.

Greenhouse gas emissions are a growing concern practically in all fields of technology. The greenhouse gas emissions of an engine mainly depend on three factors: the efficiency of the engine, the type of the used fuel, and the amount of unburned fuel in the exhaust gas.

The efficiency of an engine depends on several factors, but one significant factor is the compression ratio, i.e. the ratio between the volume of the cylinder and combustion chamber when the piston is at its bottom dead center position and the volume of the combustion chamber when the piston is at its top dead center position. A higher compression ratio generally leads to better engine efficiency, but the maximum compression ratio is often limited by self-ignition of the fuel.

The escape of unburnt fuel from the engine is a result of several factors, such as escape of fuel via exhaust valves before closing of the exhaust valves, incomplete combustion in a prechamber, quenching of the flame on combustion chamber surfaces, inability of the flame to penetrate into small crevices in the combustion chamber, and local flame extinction due to high turbulence.

Although the amount of unburned fuel in the exhaust gas is small compared to the total fuel consumption of an engine, the unburned fuel can still be a significant source of greenhouse gas emissions, because the global warming potential (GWP) of for instance methane is much greater than that of carbon dioxide.

US 2 767 691 A discloses a modified dual fuel two-stroke engine provided with a gaseous fuel injector arranged in the cylinder liner. The gaseous fuel, here liquefied petroleum gas, is injected in liquid phase.

US 2015/330289 A1 discloses a two-stroke gaseous fuelled engine, which is retrofitted to accept a gaseous fuel injector arranged in the cylinder liner.

### Summary of the invention

An object of the present invention is to provide an improved method of retrofitting a large two-stroke piston engine. The characterizing features of the method according to the invention are given in claim 1.

The method according to the invention comprises the steps of supplying liquefied gaseous fuel to each cylinder of the engine and injecting the fuel into each cylinder in liquid phase via at least one fuel injection nozzle arranged in the wall of the cylinder.

The fuel injection system according to the invention is configured to implement the method defined above.

With the method and the fuel injection system according to the invention, greenhouse gas emissions of the engine are reduced via several mechanisms: Injection of the fuel in liquid phase helps reducing the fuel concentration close to the wall of the combustion chamber. Quenching of the flame on combustion chamber surfaces is thus reduced, which reduces escape of unburned fuel with the exhaust gas. By injecting the fuel in liquid phase, the mass flow of injection can be increased compared to injection of fuel in gas phase. This allows delaying the start of fuel injection, which reduces the risk of unburned fuel escaping via open exhaust valves. A further benefit of the injection in liquid phase is that evaporation of the fuel reduces the temperature in the combustion chamber. The risk of self-ignition of the fuel is thus reduced, which allows increasing the compression ratio and thus improving engine efficiency.

According to an embodiment of the invention, the fuel is injected at a pressure of 10 to 50 bar. The pressure can be, for instance, in the range of 20 to 40 bar. Injection pressure within the above-mentioned ranges allows sufficiently short injection duration, while avoiding too deep penetration of the fuel jet into the combustion chamber and excessive contact of the fuel jet with the combustion chamber wall opposite to the fuel injector.

According to the herein claimed invention, the duration of the fuel injection is 5-20 degrees of crank angle. The duration of the fuel injection can be, for instance, 7-13 degrees of crank angle. The duration can thus be significantly shorter than the duration of the injection of a corresponding amount of fuel in gas phase and consequently the fuel injection can be delayed.

According to an embodiment of the invention, the fuel injection is started 140-40 degrees of crank angle before top dead center.

According to an embodiment of the invention, the fuel injection is started 120-95 degrees of crank angle before top dead center. With injection started in this range, the exhaust valve is nearly closed, which minimizes escape of unburned fuel before the start of combustion.

According to an embodiment of the invention, the fuel is supplied to the fuel injection nozzles at a temperature that is at least 5 °C below the boiling point of the fuel at the injection pressure. With a sufficiently low temperature, the risk of forming of vapor bubbles in the fuel injection system is reduced.

According to an embodiment of the invention, the fuel is supplied to the fuel injection nozzles at a temperature that is at most 50 °C below the boiling point of the fuel at the injection pressure. Avoiding too low injection temperatures ensures that the fuel is effectively evaporated in the combustion chamber. According to an embodiment of the invention, the fuel is injected into the cylinder at an angle that is inclined from the horizontal direction towards the upper end of the cylinder. This helps avoiding contact of the fuel jet with the combustion chamber wall opposite to the fuel injection nozzle.

According to an embodiment of the invention, the fuel is injected into each cylinder through at least two fuel injection nozzles. This allows keeping the injection duration short and the injection pressure relatively low thus reducing the penetration of the fuel jet in the combustion chamber and allowing delay of the fuel injection.

According to an embodiment of the invention, the fuel is liquefied natural gas or biogas.

A two-stroke piston engine according to the invention comprises a fuel injection system defined above.

According to an embodiment of the invention, the at least one fuel injection nozzle is arranged at a position corresponding to the position of the piston 100-30 degrees of crank angle before top dead center.

The method according to the invention for retrofitting a two-stroke piston engine, in which engine the wall of each cylinder is provided with at least one hole for introducing fuel in gas phase into the cylinder, comprises the step of arranging in each hole a plug, which is configured to function as a fuel injection nozzle for fuel in liquid phase. This allows easy conversion of an existing engine to an engine utilizing injection of gaseous fuel in liquid phase.

### Brief description of the drawings

Embodiments of the invention are described below in more detail with reference to the accompanying drawings, in which
Fig. 1 shows schematically a two-stroke piston engine and the fuel injection system of the engine,
Fig. 2 shows part of a cylinder liner and a fuel injection nozzle,
Fig. 3 shows a plug for forming a fuel injection nozzle, and
Figs. 4A-4C show schematically one cylinder of the engine of figure 1 at different crank angles.

### Description of embodiments of the invention

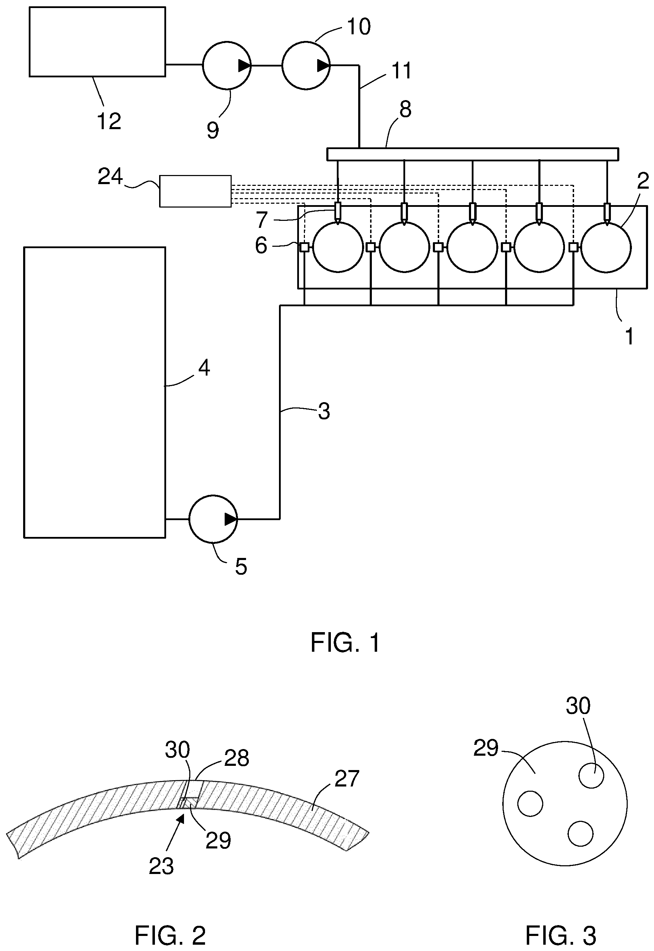

Figure 1 shows schematically a piston engine 1, i.e. a reciprocating internal combustion engine. The engine 1 is a large low-speed two-stroke engine, such as a marine engine. The cylinder bore of the engine, i.e. the inner diameter of the cylinder, is at least 260 mm. The engine can be used for driving a propeller of a ship. Alternatively, the engine 1 could be used at a powerplant for producing electricity. The maximum rotation speed of the engine is in the range of 50-220 rpm. In the embodiment of the figures, the engine 1 is a crosshead engine. The cylinder bore of the engine can be in the range of 26-110 cm. The rated power of the engine is

in the range of 1-100 MW. The engine 1 can be either a gas engine, which can be operated using gaseous fuel, or a dual-fuel or multi-fuel engine, which can be operated using either gaseous fuel or liquid fuel of one or more different types. A dual-fuel or multi-fuel engine can thus be operated in a gas mode using gaseous fuel or in a liquid fuel mode using liquid fuel. In the gas mode, the engine 1 can be operated using the Otto cycle. In the liquid fuel mode, the engine 1 can be operated using the Diesel cycle. The gaseous fuel can be ignited by injecting liquid pilot fuel into the cylinders 2 or into prechambers. The amount of the pilot fuel is small compared to the amount of the gaseous fuel. The amount of the pilot fuel can correspond to, for instance, less than three percent of the total heat release of fuel. The gaseous fuel could also be ignited by means of spark plugs. The term "gaseous fuel" refers here to fuel that is in gas phase at a temperature of 20 °C and a pressure of 1 atm (101.325 kPa).

The engine 1 comprises a plurality of cylinders 2. In the embodiment of figure 1, the engine 1 comprises five cylinders 2, but the engine 1 could comprise any reasonable number of cylinders 2, for instance 4-16 cylinders. The engine 1 comprises a fuel injection system for gaseous fuel. The fuel injection system for gaseous fuel is connected to a fuel tank 4, where the gaseous fuel is stored in liquid phase. The fuel tank 4 is thus configured to store the gaseous fuel at a temperature and pressure, at which major part of the fuel is in liquid phase. The gaseous fuel can be liquefied natural gas (LNG). The main component of natural gas is methane. Natural gas can also comprise ethane, propane and butane, as well as water and carbon dioxide. To produce liquefied natural gas, water, carbon dioxide, heavy hydrocarbons and also some other components are removed from the gas, although small amounts of impurities may be left even after removal of the undesirable components.

The boiling point of liquefied natural gas depends on its composition, but typically natural gas is cooled to approximately -162 °C for liquefaction and stored at a pressure that is close to atmospheric pressure, for instance below 250 kPa of absolute pressure.

The fuel could also be liquefied biogas. The term "biogas" refers here to gas having a similar composition as liquefied natural gas but not being from fossil sources. The biogas is thus gas of which main component is methane and which originates from a renewable source. The biogas could be produced, for instance, from organic waste.

Alternatively, the gaseous fuel could be, for instance, ammonia (NH₃). The boiling point of ammonia at atmospheric pressure is approximately -33.3 C°. Ammonia could thus be stored at a temperature of approximately -34 C° or below to keep it in liquid phase at a pressure that is close to atmospheric pressure.

The fuel injection system for gaseous fuel comprises a fuel supply line 3 and a fuel supply pump 5. The fuel supply pump 5 supplies fuel from the fuel tank 4 via the fuel supply line 3 to each cylinder 2 of the engine 1. Each cylinder 2 of the engine 1 is provided with a fuel supply valve 6, which controls injection of the fuel into the cylinder 2. The fuel supply valves 6 are connected to a control unit 24, which controls the operation of the fuel supply valves 6. The fuel injection system can comprise many additional components not shown in figure 1. For instance, the fuel injection system can comprise several fuel supply pumps. The fuel can be pressurized in two or more phases by fuel supply pumps that are arranged in series, the fuel injection system can be provided with several fuel supply pumps that are arranged in parallel for redundancy, and/or separate fuel supply pumps can supply fuel to certain groups of cylinders.

The engine 1 of figure 1 further comprises a pilot fuel injection system. The pilot fuel injection system is connected to a pilot fuel tank 12, where liquid pilot fuel is stored. The expression "liquid fuel" means here fuel that is in liquid phase at a temperature of 20 °C and a pressure of 1 atm (101.325 kPa). The pilot fuel can be, for instance, light fuel oil or marine diesel oil. The pilot fuel injection system comprises at least one pilot fuel injector 7 for each cylinder 2 of the engine 1. In the embodiment of figure 1, the pilot fuel injection system is a common rail fuel injection system. The pilot fuel injectors 7 are thus connected to a fuel rail 8, from which pressurized pilot fuel is supplied to the pilot fuel injectors 7. The pilot fuel injection system comprises a high-pressure pump 10, which supplies fuel to the fuel rail 8, and a pilot fuel supply pump 9, which supplies fuel to the high-pressure pump 10. A pilot fuel supply line 11 connects the fuel rail 8 to the pilot fuel tank 12. The pilot fuel injection system could be implemented in many different ways. For instance, instead of a single fuel rail, the system could comprise several fuel rails, or each pilot fuel injector 7 could be provided with an own fuel accumulator. The pilot fuel injection system could also comprise two or more high-pressure pumps 10 and/or pilot fuel supply pumps 9. Instead of a common rail system, each cylinder 2 could be provided with an own pilot fuel injection pump. The pilot fuel injectors 7 can be controlled by the same or a different control unit as the fuel supply valves 6.

The engine 1 can also comprise a fuel injection system for injecting liquid main fuel, such as heavy fuel, light fuel oil or marine diesel oil, into the cylinders 2 of the engine 1. The pilot fuel injection system and the fuel injection system for liquid main fuel could be integrated into a single fuel injection system or they could share common parts. For instance, if the same liquid fuel is used both as the pilot fuel and as the liquid main fuel, a common fuel supply pump could supply fuel to the high-pressure pumps of both the pilot fuel injection system and the liquid main fuel injection system. The fuel injection systems could also share high-pressure pumps, fuel rails and/or fuel injectors. For instance, a common fuel injector body could be provided with separate fuel injection nozzles and fuel injector needles for the pilot fuel and liquid main fuel. The engine 1 can comprise two or more fuel injection systems for injecting liquid main fuel into the cylinders of the engine. For instance, the engine 1 can be provided with separate fuel injection systems for heavy fuel oil and light fuel oil. The fuel injection systems can share some of the components with each other.

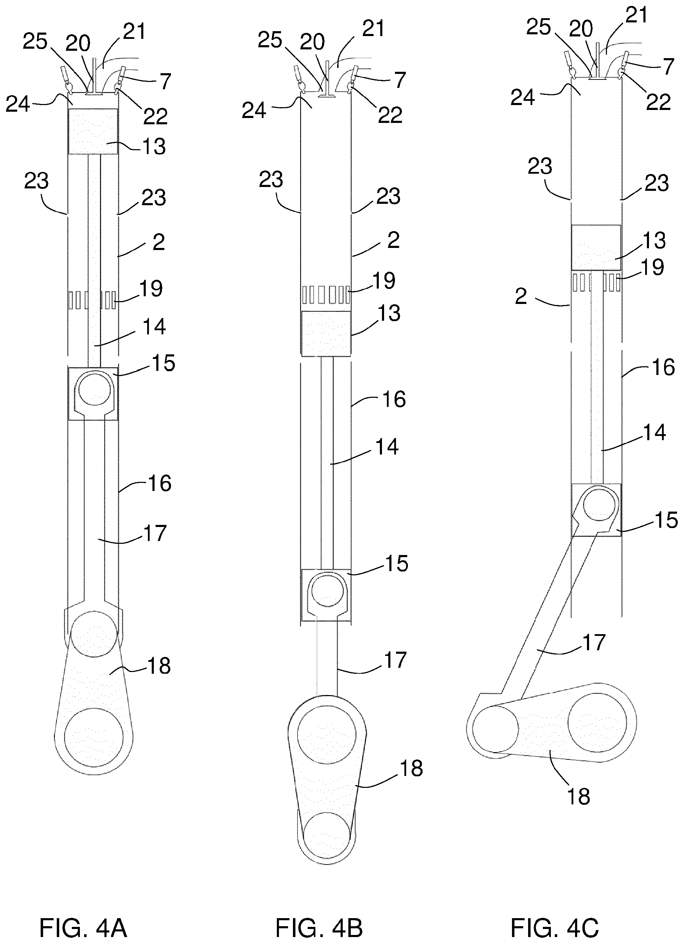

Figures 4A-4C show a simplified view of one of the cylinders 2 of the engine 1 of figure 1. Each cylinder 2 is provided with a piston 13, which is arranged to move in a reciprocating manner in the cylinder 2. In figure 4A, the piston 13 is at a top dead center (TDC) position. In figure 4B, the piston is at a bottom dead center (BDC) position. The TDC position of the piston 13 corresponds to crank angle of 0 degrees and the BDC position corresponds to crank angle of 180 degrees. In figure 4C, the piston 13 is at a position between the bottom dead center and top dead center moving towards the TDC position. In figure 4C, the crank angle is approximately 270 degrees, which could also be expressed as 90 degrees before TDC or 90 degrees after BDC.

The engine 1 of figures 4A-4C is a crosshead engine. The piston 13 is thus connected via a piston rod 14 to a crosshead 15. The crosshead 15 moves synchronized with the piston 13. The crosshead 15 is guided by means of crosshead guides 16. The crosshead 15 is connected via a connecting rod 17 to a crankshaft 18. The crosshead construction allows a long stroke. The stroke/bore ratio of the engine 1 can be for example at least 3.0, or at least 3.5.

The wall of the cylinder 2 is formed by a cylinder liner, which is arranged inside an engine block. A cylinder head closes the upper end of the cylinder 2. The cylinder liner, piston 13 and cylinder head delimit a combustion chamber 24. The cylinder 2 is provided with at least one exhaust valve 20. In the embodiment of figures 4A-4C, the cylinder 2 is provided with one exhaust valve 20, but there could also be several exhaust valves 20 for each cylinder 2. The exhaust valve 20 is arranged in the cylinder head. The exhaust valve 20 opens and closes an exhaust port 25. Via the exhaust port 25, exhaust gas is discharged from the combustion chamber 24 into an exhaust duct 21. In figures 4A and 4C the exhaust valve 20 is closed and in figure 4B the exhaust valve 20 is open.

The exhaust valve 20 can be operated for example by means of an electro-hydraulic actuator or by means of a cam. The engine can be provided with means for variable exhaust valve timing. The opening and/or closing timing of the exhaust valve 20 can thus be variable.

The cylinder 1 is provided with a plurality of inlet ports 19, which are distributed along the perimeter of the cylinder liner. The inlet ports 19 are arranged in a lower part of the cylinder 2, above the BDC position of the piston 13. The inlet ports 19 allow flow of fresh charge into the combustion chamber 24 when the piston 13 is below the upper ends of the inlet ports 19. Substantial flow of fresh charge into the cylinder 2 starts when the piston top is below the inlet ports 19 and the exhaust valve 20 is opened. Limited flow of fresh charge into the combustion chamber 24 may start already when the uppermost piston ring of the piston 13 is below the upper edges of the inlet ports 19. However, usually this flow is insignificant due to the small clearance between the piston 13 and the wall of the cylinder 2 and also due to the small difference between the cylinder pressure and the pressure of the fresh charge when the piston 13 is close to the inlet ports 19. The expression "fresh charge" refers to the gas which flows into the cylinder 2 when the inlet ports 19 are open. The fresh charge can consist of pressurized intake air, but the fresh charge can also comprise for example recirculated exhaust gas and/or gaseous fuel mixed with intake air.

The cylinder 2 further comprises at least one fuel injection nozzle 23 that is arranged in the wall of the cylinder 2. Figures 4A-4C show two fuel injection nozzles 23. In the embodiment of the figures, the fuel injection nozzles 23 are arranged opposite to each other. The fuel injection nozzles 23 are at the same height with each other. The fuel injection nozzles 23 are arranged at a position that corresponds to the position of the piston 13 at approximately 275 degrees of crank angle after TDC, or 85 degrees before TDC. The expression "the position of the piston" refers here to the position of the upper edge of the piston 13 at a certain crank angle. The position of the fuel injection nozzles 23 refers here to the height at which the center axis of the fuel injection nozzles 23 are located. The position of the fuel injection nozzles 23 could be, for instance, at a height that corresponds to the position of the piston 13 in the range of 100-30 degrees before TDC. It is also possible that the fuel injection nozzles 23 are arranged at different heights.

In the method according to the invention, the gaseous fuel is injected into the cylinder 2 in liquid phase. The fuel injection system for the gaseous fuel is thus configured to supply the fuel to the fuel injection nozzles 23 in liquid phase. The injection of the fuel in liquid phase provides several benefits: It helps keeping the fuel away from the combustion chamber surfaces, which prevents quenching of the flame and thus reduces escape of unburned fuel after combustion. It also reduces flow of the fuel into small crevices of the combustion chamber 24, into which the flame does not easily penetrate. In addition, greater mass flow rate of the injected fuel allows later injection, which helps reducing escape of unburned fuel before combustion. Further, the fuel evaporating in the combustion chamber lowers the temperature and reduces the risk of self-ignition of the fuel. This allows increasing of compression ratio, which improves engine efficiency.

The fuel can be kept in liquid phase by keeping the temperature of the gaseous fuel sufficiently low and the pressure sufficiently high. The fuel supply line 3 can be provided with suitable heat insulation to keep the fuel at a sufficiently low temperature. The fuel supply pump 5 can be configured to raise the pressure of the fuel higher than the pressure in the fuel tank 4 to raise the boiling point of the fuel.

The fuel can be injected at a pressure of 10 to 50 bar. The fuel injection pressure can be, for instance, 20 to 40 bar. The boiling point of LNG at an atmospheric pressure is approximately -162°C, depending on the composition of the gas. By raising the pressure to 40 bar, the boiling point is raised to approximately -87 °C. A pressure in the above-mentioned ranges thus helps keeping the fuel in liquid phase until injection. Also, the fuel injection duration can be kept short. On the other hand, by keeping the pressure relatively low in comparison to typical injection pressures of liquid fuel, too deep penetration of the fuel jet into the combustion chamber 24 is avoided. This reduces contact of the fuel with the combustion chamber wall opposite to the fuel injection nozzle 23.

The fuel is preferably supplied to the fuel injection nozzles 23 at a temperature that is at least 5 °C below the boiling point of the fuel at the injection pressure. This reduces the risk of forming of vapor bubbles due to boiling. However, it may be desirable to allow the temperature of the fuel to rise to certain extent before the injection. For instance, the fuel can be supplied to the fuel injection nozzles 23 at a temperature that is at most 50 °C below the boiling point of the fuel at the injection pressure. A temperature that is not too far from the boiling point ensures that the fuel evaporates rapidly after the injection.

The duration of the fuel injection can be, for instance, 5-20 degrees of crank angle. The fuel injection duration could be, for instance, 7-13 degrees. Injection in liquid phase allows greater mass flow of the fuel than injection in gas phase. The fuel injection duration can thus be shorter than the fuel injection duration of the same amount of fuel in gas phase. This allows delaying of the fuel injection. The needed injection duration for a corresponding amount of fuel in gas phase could be approximately 20 degrees of crank angle.

The fuel injection can be started in the range of 140-40 degrees of crank angle before top dead center. Advantageously, the fuel injection is started 120-95 degrees before top dead center. Late start of fuel injection ensures that the fuel is not injected before the exhaust valve 20 is at least nearly closed. This reduces flow of unburned fuel into the exhaust duct 21 before combustion.

The fuel injection must be terminated before the piston 13 moves to the level of the fuel injection nozzles 23. In the engine 1 of the figures, the fuel injection should be terminated 85 degrees before TDC. However, if the fuel injection nozzles 23 would be positioned closer to the TDC position of the piston 13, the fuel injection could continue longer.

The fuel can be injected into the cylinder 2 at an angle that is inclined from the horizontal direction towards the upper end of the cylinder 2. The fuel injection direction is thus not horizontal but slightly towards the upper end of the cylinder. This helps avoiding contact of the fuel jet with the combustion chamber wall.

The method of operating an engine according to the invention is applied to existing engines that are provided with fuel injection nozzles configured to inject fuel in gas phase into the cylinders by retrofitting the engines. In the method of retrofitting a two-stroke piston engine, in which engine 1 the wall of each cylinder 2 is provided with at least one hole 28 for introducing fuel in gas phase into the cylinder 2, each hole 28 is equipped with a plug 29, which is configured to function as an injection nozzle 23 for fuel in liquid phase.

Figure 2 shows a cross-sectional view of part of a cylinder liner 27 of an engine. The cylinder liner 27 comprises a hole 28, through which fuel in gas phase can be introduced into a cylinder 2 of the engine 1. A plug 29 is inserted into the hole 28. The plug 29 is configured to function as an injection nozzle 23 for gaseous fuel that is in liquid phase. The plug 29 therefore comprises at least one hole 30, through which the fuel can be injected into the cylinder 2. Because the density of the fuel is much greater in liquid phase than in gas phase, the hole 30 of the plug 29 can have a much smaller diameter than the hole 28 of the cylinder liner 27. Figure 3 shows a schematic front view of the plug 29. In the embodiment of the figures, the plug 29 comprises three holes 30 for injecting the fuel in liquid phase. However, the plug 29 could also be provided with a single hole, two holes, or more than three holes. The holes 30 in the plug 29 can be arranged at an angle, which directs the fuel jet more towards the TDC position than the BDC position of the piston 13. In case of two holes 30, the holes 30 can be arranged at different angles with each other. In case of more than two holes 30, the holes 30 can be arranged at least at two different angles. This allows achieving preferred distribution of the fuel inside the cylinder 2.

It will be appreciated by a person skilled in the art that the invention is not limited to the embodiments described above, but may vary within the scope of the appended claims. For instance, the invention can also be applied to other types of engines than crosshead engines.

## Claims

1. A method of retrofitting a large two-stroke piston engine (1), the engine having a cylinder inner diameter of at least 260 mm, maximum rotation speed of 50-220 rpm and rated power range of 1-100 MW, the wall of each cylinder (2) being provided with at least one hole (28) for introducing fuel in gas phase into the cylinder (2), wherein the method comprises the steps of
- arranging in each hole (28) a plug (29), which is configured to function as a fuel injection nozzle (23) for fuel in liquid phase,
- configuring the engine to operate such that liquefied gaseous fuel is supplied to each cylinder (2) of the engine (1) and injected into each cylinder (2) in liquid phase via said at least one fuel injection nozzle (23) with fuel injection duration of 5-20 degrees of crank angle.

2. A method according to claim 1, wherein the engine (1) is configured to operate such that the fuel is injected at a pressure of 10 to 50 bar.

3. A method according to claim 2, wherein the engine (1) is configured to operate such that the pressure is 20 to 40 bar.

4. A method according to any of the preceding claims, wherein the engine (1) is configured to operate such that the fuel injection duration is 7-13 degrees of crank angle.

5. A method according to any of the preceding claims, wherein the engine (1) is configured to operate such that the fuel injection is started 140-40 degrees of crank angle before top dead center.

6. A method according to claim 5, wherein the engine (1) is configured to operate such that the fuel injection is started 120-95 degrees of crank angle before top dead center.

7. A method according to any of the preceding claims, wherein the engine (1) is configured to operate such that the fuel is supplied to the fuel injection nozzles (23) at a temperature that is at least 5 °C below the boiling point of the fuel at the injection pressure.

8. A method according to any of the preceding claims, wherein the engine (1) is configured to operate such that the fuel is supplied to the fuel injection nozzles (23) at a temperature that is at most 50 °C below the boiling point of the fuel at the injection pressure.

9. A method according to any of the preceding claims, wherein the engine (1) is configured to operate such that the fuel is injected into the cylinder (2) at an angle that is inclined from the horizontal direction towards the upper end of the cylinder (2).

10. A method according to any of the preceding claims, wherein the engine is retrofitted by providing each cylinder (2) with at least two fuel injection nozzles (23).

11. A method according to any of the preceding claims, wherein the engine (1) is configured to operate using liquefied natural gas or biogas as fuel.

12. A method according to any of the preceding claims, wherein the at least one fuel injection nozzle (23) is arranged at a position corresponding to the position of the piston (13) 100-30 degrees of crank angle before top dead center.

## Patentansprüche

1. Verfahren zum Nachrüsten eines großen Zweitaktkolbenmotors (1), wobei der Motor einen Zylinderinnendurchmesser von mindestens 260 mm, eine maximale Drehgeschwindigkeit von 50-220 U/min und einen Nennleistungsbereich von 1-100 MW aufweist, wobei die Wand jedes Zylinders (2) mit mindestens einem Loch (28) zum Einführen von Kraftstoff in der Gasphase in den Zylinder (2) bereitgestellt wird, wobei das Verfahren die folgenden Schritte umfasst
- Anordnen eines Stopfens (29) in jedem Loch (28), der konfiguriert ist, um als Kraftstoffeinspritzdüse (23) für Kraftstoff in flüssiger Phase zu funktionieren,
- Konfigurieren des Motors für einen Betrieb, bei dem jedem Zylinder (2) des Motors (1) verflüssigter, gasförmiger Kraftstoff zugeführt und in jeden Zylinder (2) in flüssiger Phase über die mindestens eine Kraftstoffeinspritzdüse (23) mit einer Kraftstoffeinspritzdauer von 5-20 Grad Kurbelwinkel eingespritzt wird.

2. Verfahren nach Anspruch 1, wobei der Motor (1) konfiguriert ist, um so zu arbeiten, dass der Kraftstoff mit einem Druck von 10 bis 50 bar eingespritzt wird.

3. Verfahren nach Anspruch 2, wobei der Motor (1) konfiguriert ist, um so zu arbeiten, dass der Druck 20 bis 40 bar beträgt.

4. Verfahren nach einem der vorstehenden Ansprüche, wobei der Motor (1) konfiguriert ist, um so zu arbeiten, dass die Kraftstoffeinspritzdauer 7-13 Grad des Kurbelwinkels beträgt.

5. Verfahren nach einem der vorstehenden Ansprüche, wobei der Motor (1) konfiguriert ist, so zu arbeiten, dass die Kraftstoffeinspritzung 140-40 Grad des Kurbelwinkels vor dem oberen Totpunkt gestartet wird.

6. Verfahren nach Anspruch 5, wobei der Motor (1) konfiguriert ist, um so zu arbeiten, dass die Kraftstoffeinspritzung 120-95 Grad des Kurbelwinkels vor dem oberen Totpunkt gestartet wird.

7. Verfahren nach einem der vorstehenden Ansprüche, wobei der Motor (1) konfiguriert ist, so zu arbeiten, dass der Kraftstoff den Kraftstoffeinspritzdüsen (23) bei einer Temperatur zugeführt wird, die mindestens 5 °C unter dem Siedepunkt des Kraftstoffs bei dem Einspritzdruck liegt.

8. Verfahren nach einem der vorstehenden Ansprüche, wobei der Motor (1) konfiguriert ist, so zu arbeiten, dass der Kraftstoff den Kraftstoffeinspritzdüsen (23) bei einer Temperatur zugeführt wird, die höchstens 50 °C unter dem Siedepunkt des Kraftstoffs bei dem Einspritzdruck liegt.

9. Verfahren nach einem der vorstehenden Ansprüche, wobei der Motor (1) konfiguriert ist, um so zu arbeiten, dass der Kraftstoff in den Zylinder (2) in einem Winkel eingespritzt wird, der von der horizontalen Richtung zum oberen Ende des Zylinders (2) geneigt ist.

10. Verfahren nach einem der vorstehenden Ansprüche, wobei der Motor nachgerüstet wird, indem jeder Zylinder (2) mit mindestens zwei Kraftstoffeinspritzdüsen (23) bereitgestellt wird.

11. Verfahren nach einem der vorstehenden Ansprüche, wobei der Motor (1) konfiguriert ist, um verflüssigtes Erdgas oder Biogas als Kraftstoff zu verwenden.

12. Verfahren nach einem der vorstehenden Ansprüche, wobei die mindestens eine Kraftstoffeinspritzdüse (23) in einer Position angeordnet ist, die der Position des Kolbens (13) 100-30 Grad Kurbelwinkel vor dem oberen Totpunkt entspricht.

## Revendications

1. Procédé de modification d'un grand moteur à piston à deux temps (1), le moteur présentant un diamètre intérieur de cylindre d'au moins 260 mm, une vitesse de rotation maximale comprise entre 50 et 220 tr/min et une plage de puissance nominale de 1 à 100 MW, la paroi de chaque cylindre (2) étant pourvue d'au moins un orifice (28) destiné à l'introduction de carburant à l'état gazeux dans le cylindre (2), le procédé comprenant les étapes consistant à :
- agencer dans chaque orifice (28) un bouchon (29), qui est configuré pour fonctionner comme un injecteur de carburant (23) pour le carburant en phase liquide,
- configurer le moteur pour fonctionner de manière à ce qu'un carburant gazeux liquéfié soit fourni à chaque cylindre (2) du moteur (1) et injecté dans chaque cylindre (2) à l'état liquide par l'intermédiaire dudit au moins un injecteur de carburant (23) avec une durée d'injection de carburant de 5 à 20 degrés d'angle de vilebrequin.

2. Procédé selon la revendication 1, dans lequel le moteur (1) est configuré pour fonctionner de manière à ce que le carburant soit injecté à une pression de 10 à 50 bars.

3. Procédé selon la revendication 2, dans lequel le moteur (1) est configuré pour fonctionner de manière à ce que la pression soit de 20 à 40 bars.

4. Procédé selon l'une quelconque des revendications précédentes, dans lequel le moteur (1) est configuré pour fonctionner de manière à ce que la durée d'injection de carburant soit de 7 à 13 degrés d'angle de vilebrequin.

5. Procédé selon l'une quelconque des revendications précédentes, dans lequel le moteur (1) est configuré pour fonctionner de manière à ce que l'injection de carburant débute entre 140 et 40 degrés d'angle de vilebrequin avant le point mort haut.

6. Procédé selon la revendication 5, dans lequel le moteur (1) est configuré pour fonctionner de manière à ce que l'injection de carburant débute entre 120 et 95 degrés d'angle de vilebrequin avant le point mort haut.

7. Procédé selon l'une quelconque des revendications précédentes, dans lequel le moteur (1) est configuré pour fonctionner de manière à ce que le carburant soit fourni aux injecteurs de carburant (23) à une température d'au moins 5 °C inférieure au point d'ébullition du carburant à la pression d'injection.

8. Procédé selon l'une quelconque des revendications précédentes, dans lequel le moteur (1) est configuré pour fonctionner de manière à ce que le carburant soit fourni aux injecteurs de carburant (23) à une température d'au plus 50 °C inférieure au point d'ébullition du carburant à la pression d'injection.

9. Procédé selon l'une quelconque des revendications précédentes, dans lequel le moteur (1) est configuré pour fonctionner de manière à ce que le carburant soit injecté dans le cylindre (2) à un angle incliné par rapport à la direction horizontale vers l'extrémité supérieure du cylindre (2).

10. Procédé selon l'une quelconque des revendications précédentes, dans lequel le moteur est modifié pour équiper chaque cylindre (2) d'au moins deux injecteurs de carburant (23).

11. Procédé selon l'une quelconque des revendications précédentes, dans lequel le moteur (1) est configuré pour fonctionner en utilisant du gaz naturel liquéfié ou du biogaz comme carburant.

12. Procédé selon l'une quelconque des revendications précédentes, dans lequel l'au moins un injecteur de carburant (23) est disposé à une position correspondant à la position du piston (13), comprise entre 100 et 30 degrés d'angle de vilebrequin avant le point mort haut.
